# EUROPÄISCHE PATENTSCHRIFT

(11) **EP 4 382 682 B1**
(45) Veröffentlichungstag und Bekanntmachung des Hinweises auf die Patenterteilung: **18.11.2026**
(21) Anmeldenummer: 23212844.7
(22) Anmeldetag: 29.11.2023
(51) Int. Cl.: E02F 9/26, B60W 30/095, E01C 19/00

(54) **MOBILE BAUMASCHINE MIT EINER LENKVORRICHTUNG**
MOBILE CONSTRUCTION MACHINE WITH A STEERING DEVICE
ENGIN DE CHANTIER MOBILE AVEC DISPOSITIF DE DIRECTION

(30) Priorität: 05.12.2022 DE 102022132248
(43) Veröffentlichungstag der Anmeldung: 12.06.2024
(73) Patentinhaber: Weidemann GmbH, 34497 Korbach (DE)
(72) Erfinder: Schüttler, Torben, 34497 Korbach (DE); Fettke, Thorsten, 34477 Twistetal (DE); Prechel, Jan, 34497 Korbach (DE)
(74) Vertreter: RavensPAT Patentanwälte Partnerschaft mbB

(56) Entgegenhaltungen:
- DE-A1- 102018 131 220
- JP-A- H 093 978
- KR-B1- 102 019 780
- US-A1- 2021 254 308
- US-A1- 2021 318 440

## Beschreibung

Die Erfindung betrifft eine mobile Baumaschine, insbesondere Radlader, Teleskoplader, Bagger, Dumper oder dergleichen, mit einer Antriebseinheit zum Antreiben wenigstens eines Antriebslaufrades oder einer Antriebskette und mit einer elektrische und/oder elektronische Kontrolleinheit.

### Stand der Technik

Mobile Baumaschine, insbesondere Radlader, Teleskoplader, Bagger, Dumper oder dergleichen, mit einem Fahrzeugrahmen und mit einer Antriebseinheit zum Antreiben wenigstens eines Antriebselementes wie eines Laufrades oder Laufkette, werden heutzutage meist mit einem nachfüllbaren Kraftstoff betrieben. Dabei kommen heute hauptsächlich dieselgetriebene Fahrzeuge zum Einsatz. Zwischenzeitlich sind bereits auch elektrisch angetriebene Maschinen im Einsatz.

Außer bei z.B. Radladern mit großen Schaufeln am Hubarm weisen moderne, mobile Baumaschinen vielfach lösbar verbindbare Arbeitswerkzeuge auf, z.B. die mittels sog. "Schnellwechslern" bzw. "Wechselplatten" gehalten bzw. gelöst werden. Hierbei existieren neben "passiven" Arbeitswerkzeugen wie Schaufel, Ballen-Gabel oder dergleichen auch Arbeitswerkzeuge wie ein Kehrbesen, Mulcher, Greifarme, Greifschaufel, Hebegabeln oder dergleichen, die entsprechend ein "aktives" bzw. mit Energie antreibbares Werkzeug aufweisen.

Darüber hinaus sind auch Baumaschinen als Muldenkipper gebräuchlich, die als Arbeitswerkzeug eine kippbare Mulde aufweisen. Die kippbare Mulde kann entweder als Absetzmulde, die mittels schwenkbaren/kippbaren Hebelarmen des Baufahrzeugs aufgenommen oder z.B. auf den Boden abgesetzt werden kann, oder als Auflieger, der üblicherweise mittels Hydraulikzylinder zum Entladen angehoben bzw. gekippt werden kann, ausgebildet werden.

Es soll zukünftig autonome Baumaschinen geben, die gewisse Funktionen autonom ausführen, also ohne Steuerung und Überwachung durch einen Bediener. Diese Maschinen benötigen Sensoren, um deren Umfeld zu überwachen und eine sichere Funktion zu ermöglichen.

Derartige Sensoren haben einen festen Erfassungsbereich von z.B. 120°, so dass entweder eine größere Anzahl an Sensoren benötigt oder ein Bereich um die Maschine ggf. nicht von Sensoren abgedeckt wird. Eine große Anzahl an Sensoren verursacht hohe Kosten. Um Kosten zu sparen, wird versucht möglichst wenige Sensoren zu nutzen. Es darf aber kein Bereich um den Lader ohne Überwachung bleiben.

Außerdem kann in Kurvenfahrten ein Bereich entstehen, der mit den Sensoren schlecht oder nicht überwacht werden kann. Speziell bei knickgelenkten Fahrzeugen ist dies der Fall, da die Sensoren typischerweise auf der Kabine auf dem sogenannten Hinterwagen sitzen, so dass der Sensorbereich nicht vom Hubarm bzw. der Laderschaufel beeinträchtigt wird. Allerdings wird durch die Knicklenkung der sogenannte Vorderwagen verschwenkt, so dass die auf dem Hinterwagen montierten Sensoren möglicherweise nicht mehr den vollen Sicherheitsbereich überblicken können. Eine derartige Baumaschine wird in DE102018131220A1 gezeigt.

### Aufgabe und Vorteile der Erfindung

Aufgabe der Erfindung ist es demgegenüber, eine mobile Baumaschine vorzuschlagen, wobei wenigstens teilweise die Nachteile des Standes der Technik verbessert bzw. vermieden werden, insbesondere ein wirtschaftlicher Einsatz der Sensorik zu gewährleisten.

Diese Aufgabe wird, ausgehend von einer mobilen Baumaschine der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Baumaschine v.a. dadurch aus, dass die elektrische und/oder elektronische Kontrolleinheit wenigstens eine Autonomiesteuereinheit zum autonomen Fahren und/oder Steuern der Baumaschine in einem Autonomiemodus aufweist, wobei wenigstens eine Abstands- und/oder Umgebungserfassungseinheit zum Erfassen der Umgebung und/oder eines Mindestabstandes zu der Baumaschine vorgesehen ist, wobei die Abstands- und/oder Umgebungserfassungseinheit zumindest einen Fahrweg-Sensor zum Erfassen des Fahrweges innerhalb eines Sensorbereiches umfasst und wobei wenigstens eine Verstelleinheit zum Verstellen des Fahrweg-Sensors und/oder des Sensorbereiches vorgesehen ist.

Grundsätzlich kann die Verstelleinheit zudem auch zum Verstellen von weiteren Fahrzeug-Sensoren, insb. Seiten-Sensoren etc., ausgebildet werden. Dementsprechend können auch die nachfolgenden Weiterentwicklung bzgl. des Fahrweg-Sensors auch auf andere Fahrzeugsensoren bzw. auf Seiten-Sensoren in vorteilhafter Weise angewendet werden.

Gemäß der Erfindung ist die Position des Fahrweg-Sensors relativ zur Längsachse der Baumaschine bzw. des Baufahrzeugs veränderbar.

Es kann ein Fahrweg-Sensor bzw. Fahrzeugsensor mit vergleichsweise schmalen bzw. kleinen Sensorbereich, z.B. mit einem Erfassungswinkel bzw. einer sog. "Sensorkeule", von ca. 120°, einen deutlich größeren Bereich erfassen. Dementsprechend kann durch die Verstellung z.B. ein Erfassungswinkel bzw. Sensorbereich von (weit) über 240°, ggf. 180° oder sogar ca. 360°, verwirklicht werden, obwohl z.B. die sog. "Sensorkeule" lediglich ca. 120° aufweist. Hiermit kann die Anzahl der benötigten Sensoren, insb. Fahrweg-Sensoren, vergleichsweise klein und somit eine kostengünstige Erfassung des Fahrwegs bzw. der gesamten Umgebung verwirklicht werden.

Laut Erfindung ist die Verstelleinheit derart ausgebildet, dass in Abhängigkeit eines Lenkwinkels und/oder einer Fahrgeschwindigkeit das Verstellen des Fahrweg-Sensors und/oder des Sensorbereiches und/oder Fahrzeugsensors vorgesehen ist. Hiermit kann eine vorteilhafte Anpassung an die aktuelle Ist-Fahrsituation realisiert werden, die im Wesentlichen vom Lenken/Lenkwinkel und/oder der Fahrgeschwindigkeit abhängt.

Gemäß der Erfindung ist die Verstelleinheit als Horizontal-Verstelleinheit zum Verstellen des Fahrweg-Sensors und/oder des Sensorbereiches quer/senkrecht in Bezug auf den Fahrweg und/oder auf einer horizontalen Ebene vorgesehen.

Die Verstelleinheit weist und/oder die Horizontal-Verstelleinheit wenigstens eine Drehachse zum Verdrehen des Fahrweg-Sensors und/oder des Sensorbereiches quer/senkrecht in Bezug auf den Fahrweg und/oder um eine vertikale Hochachse auf. Alternativ oder in Kombination hierzu kann die Verstelleinheit und/oder die Horizontal-Verstelleinheit wenigstens eine Linearverstelleinheit zum linearen Verstellen des Fahrweg-Sensors und/oder des Sensorbereiches quer/senkrecht in Bezug auf den Fahrweg und/oder auf der horizontalen Ebene aufweisen. Das bedeutet, dass entweder durch seitliches Verfahren des Sensors und/oder durch ein Verschwenken des Sensors um die Hochachse die Verstellung realisiert wird.

Die Verstellung bzw. Beweglichkeit kann somit in vorteilhafter Weise einerseits mit einer Drehbewegung oder andererseits mit einer Linearbewegung verwirklicht werden, z.B. entlang einer Führung bzw. Führungsschiene quer zur Fahrtrichtung. Es kann grundsätzlich auch möglich sein, einen Sensor um 180° oder auch mehr, z.B. 360°, zu verschwenken. So kann beispielsweise bei einem Fahrweg-Sensor, der in Normalstellung nach vorne in Fahrtrichtung ausgerichtet ist, d.h. in Richtung des Arbeitswerkezuges, auch ein rückwärtiger Bereich überwacht werden, so dass eine Rückwärtsfahrt ermöglicht wird.

Der Sensor ist in vorteilhafter Weise parallel zum Lenkwinkel ausgerichtet, auch bei Kurvenfahrten bzw. im eingeschlagenen Zustand des Fahrzeugs. Es besteht die Möglichkeit zur Schwenkung des Sensors um die Hochachse, insb. links/rechts. Anders ausgedrückt, folgt der Sensor dem Lenkwinkel bzw. dem Lenkeinschlag der Lenkung.

Der Fahrweg-Sensor bzw. der Fahrzeugsensor weist wenigstens ein Sensorgehäuse auf. So kann die Verstelleinheit und/oder die Horizontal-Verstelleinheit als Gehäuse-Verstelleinheit zum Verstellen des Sensorgehäuses ausgebildet werden. Alternativ oder in Kombination hierzu kann die Verstelleinheit und/oder die Horizontal-Verstelleinheit als Sensorbereich-Verstelleinheit zum Verstellen wenigstens des Sensorbereichs innerhalb des Sensorgehäuses ausgebildet werden. Dementsprechend kann der Fahrweg-/Sensor einerseits in seiner Position bzw. Ausrichtung beweglich sein, d.h. dass sich ein Sensor samt Gehäuse, oder ein Sensor in einem feststehenden Gehäuse bewegen kann. Ein vorteilhafter Sensor-Antrieb kann beispielsweise mittels eines elektrischen Aktuators erfolgen, z.B. elektrisch, hydraulisch, elektro-mechanisch, mittels Gelenken, pneumatisch u.s.w..

Beispielsweise kann die Verstelleinheit und/oder die Horizontal-Verstelleinheit wenigstens ein Umlenkelement zum Umlenken des Sensorbereiches aufweisen. So kann u.a. ein feststehender Sensor mit einem beweglichen Umlenkelement bzw. einem Spiegel oder dergleichen genutzt werden.

Beispielsweise ist eine zumindest einen Fahrersitz und wenigstens ein Lenkelement/Lenkrad der Lenkvorrichtung aufweisende Fahrerkabine für einen Fahrer vorgesehen, wobei wenigstens ein Bedienelement, insb. Fußpedal, sog. Joystick, Tastatur, Touchscreen und/oder Touchpad oder dergleichen, zum manuellen Bedienen/Betätigen von einer Bedienperson in einem Fahrermodus vorgesehen ist. Hierdurch kann ein autonomer Betreib bzw. ein Autonomiemodus und zudem auch ein Fahrermodus umgesetzt werden. Dies hat den Vorteil, dass die Baumaschine einerseits manuell von einem Fahrer/Bediener und andererseits autonom betrieben werden kann. Beispielsweise können sog. "Standartaufgaben" bzw. sich wiederholende Aufgaben/Tätigkeiten im Autonomiemodus bzw. autonom ohne Fahrer erledigt bzw. durchgeführt werden, z.B. ein sog. Hoflader räumt die sog. "Futtergasse" jeden Tag auf oder räumt den Mist im Stahl weg. Komplexe und/oder einmalige/seltene Tätigkeit wie eine Baugrube für ein neues/weiteres Gebäude können manuell bzw. mit einem Fahrer durchgeführt bzw. realisiert werden. Dies verbessert die Flexibilität der Baumaschine in erheblichem Maß.

Vorteilhafterweise weist wenigstens die Fahrerkabine den Fahrweg-Sensor und/oder die Verstelleinheit und/oder die Horizontal-Verstelleinheit und/oder die Linearverstelleinheit und/oder die Drehachse und/oder die Sensorbereich-Verstelleinheit und/oder die Gehäuse-Verstelleinheit umfasst. Hierdurch sind die Sensoren bzw. der Fahrweg-Sensor in erhöhter Position angeordnet, so dass gerade bei landwirtschaftlich eingesetzten Baumaschine eine Störung durch niedere Pflanzen wie Gras etc. wirkungsvoll minimiert bzw. verhindert wird.

Alternativ oder in Kombination hierzu können die Sensoren bzw. der Fahrweg-Sensor am Tragrahmen der Baumaschine angeordnet werden. Hierbei ist eine etwas angehobene Position bzw. Positionierung wiederum von Vorteil. Beispielweise sind die Sensoren bzw. der Fahrweg-Sensor am Tragrahmen der Baumaschine in einer Höhe von mindestens einem Meter bzw. mindestens auf sog. Bauchhöhe oder gar Brusthöhe angeordnet. Vorteilhafterweise ist der/die Sensoren bzw. der Fahrweg-Sensor, z.B. am Tragrahmen und/oder der Fahrkabine der Baumaschine, über dem Arbeitswerkzeug in dessen Fahrposition angeordnet. Oftmals sind das Arbeitswerkzeug wie eine Schaufel, Kabel etc. z.B. eines Laders wie Rad-/Hof- oder Teleskoplader, während der Fahrt in abgesenkter Fahrposition angeordnet. Von Vorteil ist die vorgenannte Anordnung des/der Sensoren bzw. der Fahrweg-Sensoren an der Baumaschine oberhalb bzw. über dem Arbeitswerkzeug, so dass der Sensorbereich bzw. die sog. Sensorkeule über dem Arbeitswerkzeug, insb. in Fahrtrichtung, angeordnet ist bzw. hinausragt. Dies verbessert die Erfassung des Fahrweges bzw. der Umgebung während der Fahrt bzw. Arbeit.

Generell kann die Baumaschine eine/ein beliebige/s Lenkung bzw. Lenksystem aufweisen, wie z.B. Panzerlenkung, Vorderrad-/ Hinterrad-Lenkung, Vierradlenkung, insb. Hundeganglenkung, oder dergleichen. Vorteilhafterweise ist die Lenkvorrichtung als Knick-Lenkung ausgebildet, wobei wenigstens die Knick-Lenkung den Fahrweg-Sensor und/oder die Verstelleinheit und/oder die Horizontal-Verstelleinheit und/oder die Linearverstelleinheit und/oder die Drehachse und/oder die Sensorbereich-Verstelleinheit und/oder die Gehäuse-Verstelleinheit umfasst. Die vorteilhafter Verstellung bzw. Verstelleinheit ist gerade bei Baumaschinen mit Knicklenkung von großem Vorteil.

Baumaschinen mit Knicklenkung weisen einen vorderen Teil bzw. dem sog. Vorderwagen und einen hinteren Teil bzw. dem sog. Hinterwagen auf, die miteinander über/mittels der Knicklenkung verbunden sind. Beispielsweise ist der Fahrweg-Sensor bzw. die Sensoren am hinteren Teil bzw. dem sog. Hinterwagen angeordnet, auf dem z.B. zudem auch die Fahrerkabine in vorteilhafter Weise angeordnet bzw. vorgesehen ist.

Vorteilhafterweise ist wenigstens ein Lenkwinkel-Sensor zum Erfassen des Lenkwinkels vorgesehen. Hiermit kann z.B. mit Hilfe der Kontrolleinheit bzw. des Sensorsignales eine vorteilhafte Steuerung/Kontrolle der Verstelleinheit bzw. der Verstellung des Fahrweg-Sensors bzw. der Fahrzeugsensoren realisiert werden.

Beispielsweise ist der Lenkwinkel-Sensor als Hubzylinder-Verstellweg-Sensor zum Erfassen eines Verstellweges eines Hubzylinders der Lenkvorrichtung ausgebildet. Dies ist gerade bei Knicklenkungen von besonderem Vorteil, da diese üblicherweise mindestens einen (hydraulischen) Hubzylinder zum Verstellen/Lenken aufweisen. Demzufolge kann dieser Hubzylinder bzw. dessen Verstellung für die Erfassung des Lenkwinkels in vorteilhafter Weise herangezogen werden.

In einer besonderen Weiterbildung der Erfindung ist der Fahrweg-Sensor als Front-Sensor für eine Vorwärtsfahrt an einem Frontbereich der Baumaschine und/oder mit einem Erfassungsbereich ausgebildet, wobei der Erfassungsbereich in Richtung einer Vorwärtsfahrt bzw. des Arbeitswerkzeuges ausgerichtet ist, und/oder der an einem Front-Bereich der Baumaschine, insb. am sog. Vorderwagen, angeordnet ist. Alternativ oder in Kombination hierzu ist der Fahrweg-Sensor als Heck-Sensor für eine Rückwärtsfahrt an einem Heckbereich der Baumaschine und/oder mit einem Erfassungsbereich ausgebildet, wobei der Erfassungsbereich in Richtung einer Rückwärtsfahrt bzw. in entgegengesetzte Richtung bzgl. der Anordnung des Arbeitswerkzeuges ausgerichtet ist, und/oder der an einem HeckBereich der Baumaschine, insb. am sog. Hinterwagen, angeordnet ist.

Vorteilhafterweise ist der Fahrweg-Sensor als Front-Sensor für eine Vorwärtsfahrt an/auf einem hinteren Bereich der Baumaschine bzw. dem sog. Hinterwagen angeordnet und mit einem Erfassungsbereich ausgebildet, wobei der Erfassungsbereich in Richtung einer Vorwärtsfahrt bzw. des Arbeitswerkzeuges ausgerichtet ist. Dies hat sich gerade bei Baumaschinen mit Knicklenkung als besonders positiv erwiesen.

Grundsätzlich sind auch noch weitere, spezielle Weiterbildungen bzw. vorteilhafte Ausgestaltungen realisierbar:
- In einer Variante könnten nur die in bzw. entgegen der Fahrtrichtung weisenden Sensoren verstellbar bzw. beweglich ausgebildet werden. Andere bzw. weitere vorteilhafte Sensoren, wie z.B. die seitlich bzw. quer zur Fahrtrichtung ausgerichtet sind, könnten einen festen Erfassungsbereich aufweisen, d.h. nicht-verstellbar sein.
- In einer anderen Variante könnten zusätzlich zu den in/gegen der Fahrtrichtung ausgerichteten Sensoren auch andere Sensoren beweglich ausgerichtet sein, z.B. quer zur Fahrtrichtung.
- In einer anderen Variante könnten auch nur die Sensoren quer zur Fahrtrichtung beweglich sein.

Von Vorteil sind ein oder mehrere Sensoren an der Baumaschine, insbesondere an der Kabine, vorgesehen, der/die nach vorne blicken, zumindest auf dem sog. Hinterwagen bzw. für die sog. Umfelderkennung.

Grundsätzlich können Sensoren verwendet werden, wobei der/die Sensoren z.B. als LIDAR-, RADAR-, Ultraschall-, Infrarot- und/oder Laser-Sensoren und/oder als optischer Sensor wie z.B. als Kamera etc. ausgebildet werden.

Allgemein ist von großem Vorteil, möglichst den Lenkwinkel zu überwachen, insb. bei Fahrzeugen mit starrem Rahmen, bzw. die Stellung der Rahmenhälften bei knickgelenkten Fahrzeugen. Hierzu kann z.B. ein Lenkwinkelsensor direkt am Gelenk bzw. Drehpunkt angebracht werden. Alternativ kann der Weg des Zylinders überwacht werden. Es könnte auch eine optische Erkennung von Referenzpunkten auf dem Hubarm zum Berechnen des Lenkwinkels umgesetzt werden. Ebenfalls möglich ist ein Seilzugsensor oder dergleichen, der zwischen den beiden Rahmenhälften angeordnet ist.

Generell ist eine Einstellung der Sensorposition in Abhängigkeit von der Fahrgeschwindigkeit, z.B. nur oberhalb einer Schwelle bzw. eines vorgegebenen Grenzwertes, von Vorteil. Hierbei kann eine vorteilhafte Verstellung gewährleistet werden, wobei kein Versuchen die Bodenunebenheiten auszugleichen, sondern nur bei echten Lenkbewegungen die Sensorverstellung umgesetzt/aktiviert wird.

Grundsätzlich kann mit den vorgenannten Varianten und/oder einzelnen Merkmalen der Erfindung eine vorteilhafte Bauweise ohne großen Aufwand und eine Einsparung von Sensoren bzw. Kosten realisiert werden. Zudem kann u.a. eine Verringerung von Fehlinterpretationen durch Fokussierung auf den relevanten Bereich in der gewählten Fahrtrichtung erreicht werden.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematisch, perspektivische Ansicht eines Ausschnitts eines Kabinendaches einer ersten, mobilen Baumaschine, insbesondere eines Radladers, gemäß der Erfindung,
- Figur 2: eine schematische Seitenansicht der mobilen Baumaschine, insbesondere des Radladers, gemäß Figur 1,
- Figur 3: eine schematische Draufsicht auf eine zweite, mobile Baumaschine, insbesondere einen Radlader, mit schwenkbarem Sensorbereich gemäß der Erfindung und
- Figur 4: eine schematische Draufsicht auf eine dritte, mobile Baumaschine, insbesondere einen Radlader, mit verschiebbarem Sensorbereich gemäß der Erfindung.

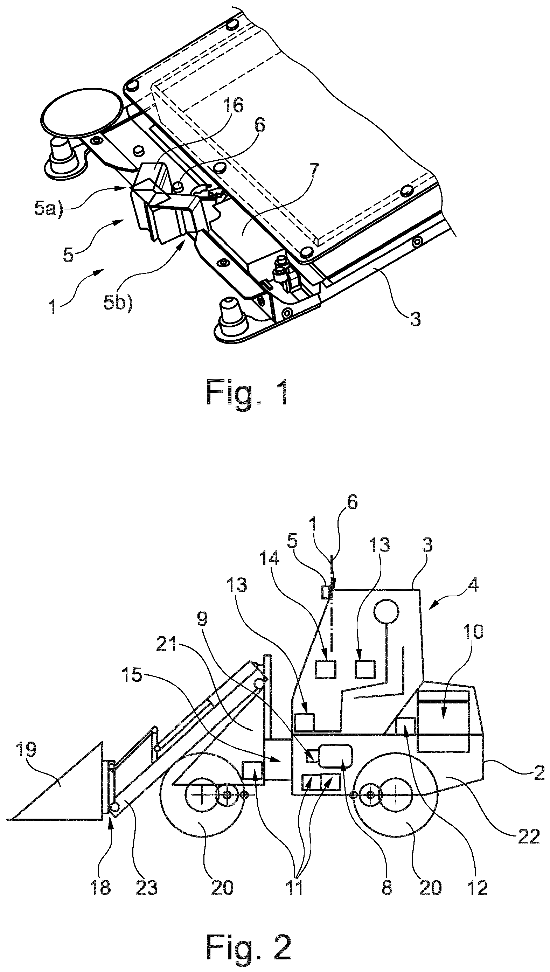

In Figur 1 ist ein Ausschnitt eines Kabinendaches 3 einer mobilen Baumaschine 1 bzw. eines Radladers 1 schematisch dargestellt. Der Radlader 1 ist in Figur 2 in Seitenansicht dargestellt und umfasst einen Fahrzeugrahmen 2, mindestens einen elektrischen Akku bzw. Energiespeicher 10 zum Speichern elektrischer Energie, wobei der/die Energiespeicher 10 v.a. für die Versorgung des Fahrantriebs und die Arbeitsfunktionen dienen. Alternativ kann der Radlader 1 in allgemein bekannter Weise auch einen Verbrennungsmotor, insb. einen Dieselmotor, für den Antrieb aufweisen.

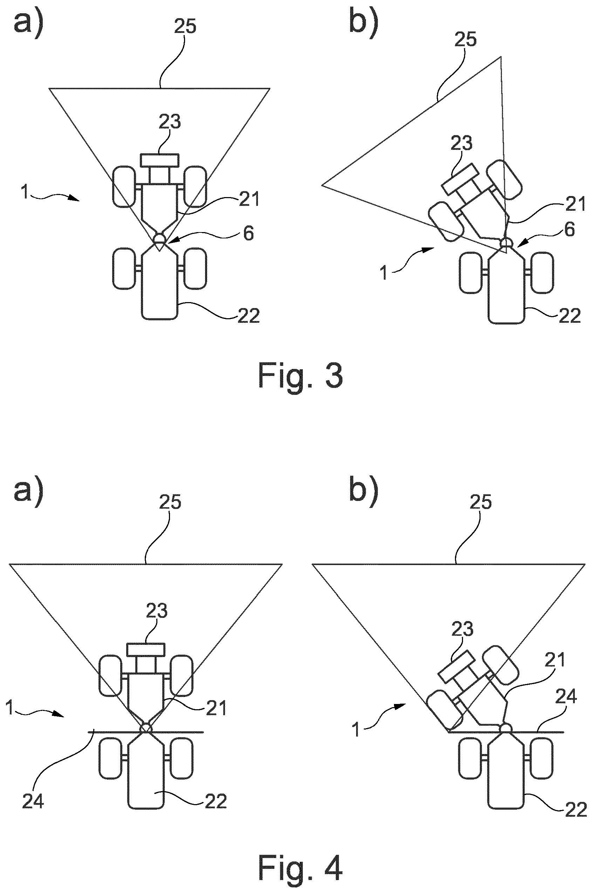

Das Kabinendach 3 einer Kabine 4 umfasst einen Fahrwegsensor 5, der um eine vertikale Drehachse 6 mit Hilfe eines Aktuators 7, insb. eines Linearantriebes 7 mit Verstellmechanismus, verstellbar bzw. verschwenkbar ist. Der Fahrwegsensor 5 umfasst ein Gehäuse 16, in dem (nicht näher dargestellt) ein Sensorelement angeordnet ist und das einen Sensorbereich 25 bzw. eine sog. Sensorkeule 25 aufweist (vgl. Figuren 3, 4).

In Figur 1 sind schematisch neben der Normal-/Mittelstellung des Fahrwegsensors 5 bzw. Gehäuses 16, d.h. in gerader bzw. paralleler Stellung zur Längsmittelachse des Laders 1 bzw. in senkrechter Stellung zur Dachvorderkante des Daches 3 sind die beiden Extremstellungen des Sensors 5 bzw. Gehäuses 16 als Fahrsensor 5a) und 5b) schematisch abgebildet.

Die Position des Sensors 5 bzw. Gehäuses 16 erfolgt in vorteilhafter Weise unter Berücksichtigung eines Lenkwinkels bzw. einer Verdrehung der Lenkung, insb. einer Knicklenkung 15. Das bedeutet, dass z.B. die Verstellung/Verdrehung eines sog. Vorderwagens 21 und eines Hinterwagens 22.

Wie allg. üblicher wird die Steuerung über mindestens ein Stellglied 13, 14 wie z.B. ein Fuß- oder Handsteller 13 bzw. ein Joy-Stick 14 und Fußpedal 13 realisiert. Eine Ansteuerung des E-Motors 8 bzw. Arbeitsmotors 8 erfolgt über eine Kontrolleinheit 12 und Umrichter 11. Zudem werden elektrische und/oder hydraulische Leitungen (nicht näher dargestellt) in vorteilhafter Weise über die Knicklenkung 15 bzw. ein zentrales Knickgelenk 15 geführt, um z.B. einen Hubarm 23 bzw. ein Werkzeug 19 zu verstellen.

Beispielsweise ist ein Lenkwinkelsensor vorgesehen, der z.B. am Knickgelenk 15 und/oder am nicht näher dargestellten Lenkrad bzw. der Lenkung in der Kabine 4 angeordnet ist und ein Lenksignal für die Verstellung des Fahrwegsenors 5 bzw. des Aktuators 7 generiert.

In den Figuren 3 und 4 sind zwei unterschiedliche Varianten für eine derartige Verstellung schematisch dargestellt. Gemäß Figur 3 erfolgt die Verstellung als Schwenkbewegung um die Drehachse 6, so dass bei Geradeausfahrt gemäß Figur 3a) der Sensorbereich 25 gerade in Längsrichtung des Laders 1 ausgerichtet ist. Bei einer Kurvenfahrt, insb. einer Linkskurve gemäß Figur 3b) verschwenkt der Sensorbereich 25 bzw. der Sensor um die Drehachse 6, so dass der Sensorbereich 25 mit dem Vorderwagen 21 des Laders 1 verschwenkt und längs des Fahrweges ausgerichtet ist.

Entsprechendes kann auch mit der weiteren Variante gemäß Figur 4 umgesetzt werden. Allerdings erfolgt die Verstellung hierbei nicht mittels einer Schwenkbewegung des Sensors 5 bzw. des Sensorbereichs 25, sondern mittels einer linearen Verstellung entlang einer Geraden 24 bzw. einer Führung/Führungselement 24, z.B. an der Kabine 4 bzw. dem Kabinendach 3, bewegt. Hierbei erfolgt die Bewegung des Sensors 5 bzw. Sensorbereiches 25 parallel zur Querachse bzw. senkrecht/orthogonal zur Längsachse des Laders 1 ebenfalls in Abhängigkeit des Lenkwinkels.

## Patentansprüche

1. Mobile Baumaschine (1), insbesondere Radlader (1), Teleskoplader, Bagger, Dumper, Bodenverdichtungsvorrichtung wie ein Vibrationsstampfer, eine Vibrationsplatte oder eine Walze, oder dergleichen, mit einem Tragrahmen (2) und mit einer Antriebseinheit (8) zum Antreiben wenigstens eines Antriebselementes (20), z.B. Antriebsrad/-walze und/oder Kettenfahrwerk oder Vibrationselement, und/oder eines Arbeitswerkzeuges (19), z.B. Greif-/Schaufel, Gabel, Vibrationselement, Fräse, Räumschild, Mulde oder dergleichen, wobei die Antriebseinheit (8) wenigstens einen Antriebsmotor (8), insb. einen Verbrennungsmotor und/oder einen Elektromotor und/oder einen Hydraulikmotor (9), und eine Lenkvorrichtung (15) zum Lenken der Baumaschine in Richtung eines Fahrweges und eine Werkzeugaufnahme (18) zum Aufnehmen und/oder Halten/Fixieren des Arbeitswerkzeuges (19) und/oder eine Hubeinrichtung (23), insb. Hubarm, Greifarm, Teleskoparm, Muldenkippeinheit oder dergleichen, aufweist, wobei wenigstens eine elektrische und/oder elektronische Kontrolleinheit (12) zum Kontrollieren der Antriebseinheit (8) und/oder des Antriebsmotors und/oder der Lenkvorrichtung (15) und/oder der Hubeinrichtung (23) und/oder des Arbeitswerkzeuges (8) und/oder der Werkzeugaufnahme (18) vorgesehen ist, wobei die elektrische und/oder elektronische Kontrolleinheit (12) wenigstens eine Autonomiesteuereinheit zum autonomen Fahren und/oder Steuern der Baumaschine (1) in einem Autonomiemodus aufweist, wobei wenigstens eine Abstands- und/oder Umgebungserfassungseinheit (5) zum Erfassen der Umgebung und/oder eines Mindestabstandes zu der Baumaschine vorgesehen ist, wobei die Abstands- und/oder Umgebungserfassungseinheit zumindest einen Fahrweg-Sensor (5) zum Erfassen des Fahrweges innerhalb eines Sensorbereiches (25) umfasst und wobei wenigstens eine Verstelleinheit (6, 7, 24) zum Verstellen des Fahrweg-Sensors (5) und/oder des Sensorbereiches (25) vorgesehen ist, **dadurch gekennzeichnet, dass** wenigstens ein Lenkwinkel-Sensor zum Erfassen eines Lenkwinkels vorgesehen ist, dass die Verstelleinheit (6, 7, 24) derart ausgebildet ist, dass in Abhängigkeit des Lenkwinkels das Verstellen des Fahrweg-Sensors (5) und des Sensorbereiches (25) vorgesehen ist, dass die Verstelleinheit (6, 7, 24) wenigstens eine Drehachse (6) zum Verdrehen des Fahrweg-Sensors (5) und des Sensorbereiches (25) quer/senkrecht in Bezug auf den Fahrweg und/oder um eine vertikale Hochachse (6) aufweist, so dass die Position des Fahrweg-Sensors relativ zur Längsachse der Baumaschine veränderbar ist.

2. Baumaschine nach Anspruch 1, **dadurch gekennzeichnet, dass** die Verstelleinheit (6, 7, 24) derart ausgebildet ist, dass in Abhängigkeit einer Fahrgeschwindigkeit das Verstellen des Fahrweg-Sensors (5) und/oder des Sensorbereiches (25) vorgesehen ist.

3. Baumaschine nach einem der vorgenannten Ansprüche, **dadurch gekennzeichnet, dass** die Verstelleinheit (6, 7, 24) als Horizontal-Verstelleinheit (6, 7, 24) zum Verstellen des Fahrweg-Sensors (5) und/oder des Sensorbereiches (25) quer/senkrecht in Bezug auf den Fahrweg und/oder auf einer horizontalen Ebene vorgesehen ist.

4. Baumaschine nach einem der vorgenannten Ansprüche, **dadurch gekennzeichnet, dass** die Verstelleinheit (6, 7, 24) und/oder die Horizontal-Verstelleinheit wenigstens eine Linearverstelleinheit (24) zum linearen Verstellen des Fahrweg-Sensors (5) und/oder des Sensorbereiches (25) quer/senkrecht in Bezug auf den Fahrweg und/oder auf der horizontalen Ebene aufweist.

5. Baumaschine nach einem der vorgenannten Ansprüche, **dadurch gekennzeichnet, dass** der Fahrweg-Sensor (5) wenigstens ein Sensorgehäuse (16) aufweist.

6. Baumaschine nach einem der vorgenannten Ansprüche, **dadurch gekennzeichnet, dass** die Verstelleinheit (6, 7, 24) und/oder die Horizontal-Verstelleinheit als Gehäuse-Verstelleinheit zum Verstellen des Sensorgehäuses (16) ausgebildet ist.

7. Baumaschine nach einem der vorgenannten Ansprüche, **dadurch gekennzeichnet, dass** die Verstelleinheit (6 ,7, 24) und/oder die Horizontal-Verstelleinheit als Sensorbereich-Verstelleinheit zum Verstellen wenigstens des Sensorbereichs (25) innerhalb des Sensorgehäuses (16) ausgebildet ist.

8. Baumaschine nach einem der vorgenannten Ansprüche, **dadurch gekennzeichnet, dass** die Verstelleinheit (6, 7, 24) und/oder die Horizontal-Verstelleinheit wenigstens ein Umlenkelement zum Umlenken des Sensorbereiches (25) aufweist.

9. Baumaschine nach einem der vorgenannten Ansprüche, **dadurch gekennzeichnet, dass** eine zumindest einen Fahrersitz und wenigstens ein Lenkelement/Lenkrad der Lenkvorrichtung (15) aufweisende Fahrerkabine (4) für einen Fahrer vorgesehen ist, wobei wenigstens ein Bedienelement (13, 14), insb. Fußpedal, sog. Joystick, Tastatur, Touchscreen und/oder Touchpad oder dergleichen, zum manuellen Bedienen/Betätigen von einer Bedienperson in einem Fahrermodus vorgesehen ist.

10. Baumaschine nach einem der vorgenannten Ansprüche, **dadurch gekennzeichnet, dass** wenigstens die Fahrerkabine (4) den Fahrweg-Sensor (5) und/oder die Verstelleinheit (6, 7, 24) und/oder die Horizontal-Verstelleinheit und/oder die Linearverstelleinheit (24) und/oder die Drehachse (6) und/oder die Sensorbereich-Verstelleinheit (7) und/oder die Gehäuse-Verstelleinheit (7) umfasst.

11. Baumaschine nach einem der vorgenannten Ansprüche, **dadurch gekennzeichnet, dass** die Lenkvorrichtung (15) als Knick-Lenkung (15) ausgebildet ist und dass wenigstens die Knick-Lenkung (15) den Lenkwinkel-Sensor und/oder den Fahrweg-Sensor und/oder die Verstelleinheit und/oder die Horizontal-Verstelleinheit und/oder die Linearverstelleinheit und/oder die Drehachse und/oder die Sensorbereich-Verstelleinheit und/oder die Gehäuse-Verstelleinheit umfasst.

12. Baumaschine nach einem der vorgenannten Ansprüche, **dadurch gekennzeichnet, dass** der Lenkwinkel-Sensor als Hubzylinder-Verstellweg-Sensor zum Erfassen eines Verstellweges eines Hubzylinders der Lenkvorrichtung ausgebildet ist.

13. Baumaschine nach einem der vorgenannten Ansprüche, **dadurch gekennzeichnet, dass** der Fahrweg-Sensor als Front-Sensor für eine Vorwärtsfahrt an einem Front-Bereich der Baumaschine und/oder als Heck-Sensor für eine Rückwärtsfahrt an einem Heckbereich der Baumaschine ausgebildet/angeordnet ist.

## Claims

1. Mobile construction machine (1), in particular wheel loader (1), telescopic loader, excavator, dumper, ground compaction device such as a vibration tamping machine, a vibration plate or a roller, or the like, comprising a support frame (2) and a drive unit (8) for driving at least one drive element (20), e.g. drive wheel/roller and/or tracked running gear or vibration element, and/or a working tool (19), e.g. grab shovel, fork, vibration element, milling cutter, clearing plate, skip or the like, wherein the drive unit (8) has at least one drive motor (8), in particular a combustion engine and/or an electric motor and/or a hydraulic motor (9), and a steering device (15) for steering the construction machine in the direction of a travel path, and a tool holder (18) for receiving and/or holding/fixing the working tool (19) and/or a lifting device (23), in particular lifting arm, gripper arm, telescopic arm, skip tipping unit or the like, wherein at least one electrical and/or electronic control unit (12) for controlling the drive unit (8) and/or the drive motor and/or the steering device (15) and/or the lifting device (23) and/or the working tool (8) and/or the tool holder (18) is provided, wherein the electrical and/or electronic control unit (12) has at least one autonomy control unit for autonomously driving and/or controlling the construction machine (1) in an autonomy mode, wherein at least one distance and/or surroundings detection unit (5) for detecting the surroundings and/or a minimum distance from the construction machine is provided, wherein the distance and/or surroundings detection unit comprises at least one travel path sensor (5) for detecting the travel path within a sensor region (25) and wherein at least one adjustment unit (6, 7, 24) for adjusting the travel path sensor (5) and/or the sensor region (25) is provided, **characterized in that** at least one steering angle sensor for detecting a steering angle is provided, **in that** the adjustment unit (6, 7, 24) is designed in such a way that the adjustment of the travel path sensor (5) and the sensor region (25) is provided depending on the steering angle, **in that** the adjustment unit (6, 7, 24) has at least one rotation axis (6) for rotating the travel path sensor (5) and the sensor region (25) transversely/perpendicularly in relation to the travel path and/or around a vertical axis (6), so that the position of the travel path sensor relative to the longitudinal axis of the construction machine can be changed.

2. Construction machine according to Claim 1, **characterized in that** the adjustment unit (6, 7, 24) is designed in such a way that the adjustment of the travel path sensor (5) and/or the sensor region (25) is provided depending on a speed of travel.

3. Construction machine according to either of the preceding claims, **characterized in that** the adjustment unit (6, 7, 24) is provided as a horizontal adjustment unit (6, 7, 24) for adjusting the travel path sensor (5) and/or the sensor region (25) transversely/perpendicularly in relation to the travel path and/or on a horizontal plane.

4. Construction machine according to any of the preceding claims, **characterized in that** the adjustment unit (6, 7, 24) and/or the horizontal adjustment unit has at least one linear adjustment unit (24) for linearly adjusting the travel path sensor (5) and/or the sensor region (25) transversely/perpendicularly in relation to the travel path and/or on the horizontal plane.

5. Construction machine according to any of the preceding claims, **characterized in that** the travel path sensor (5) has at least one sensor housing (16).

6. Construction machine according to any of the preceding claims, **characterized in that** the adjustment unit (6, 7, 24) and/or the horizontal adjustment unit is designed as a housing adjustment unit for adjusting the sensor housing (16).

7. Construction machine according to any of the preceding claims, **characterized in that** the adjustment unit (6, 7, 24) and/or the horizontal adjustment unit is designed as a sensor region adjustment unit for adjusting at least the sensor region (25) within the sensor housing (16).

8. Construction machine according to any of the preceding claims, **characterized in that** the adjustment unit (6, 7, 24) and/or the horizontal adjustment unit has at least one deflection element for deflecting the sensor region (25).

9. Construction machine according to any of the preceding claims, **characterized in that** a driver's cab (4) having at least one driver's seat and at least one steering element/steering wheel of the steering device (15) is provided for a driver, wherein at least one operating element (13, 14), in particular foot pedal, so-called joystick, keyboard, touchscreen and/or touchpad or the like, is provided for manual operation/actuation by an operator in a driver mode.

10. Construction machine according to any of the preceding claims, **characterized in that** at least the driver's cab (4) comprises the travel path sensor (5) and/or the adjustment unit (6, 7, 24) and/or the horizontal adjustment unit and/or the linear adjustment unit (24) and/or the rotation axis (6) and/or the sensor region adjustment unit (7) and/or the housing adjustment unit (7).

11. Construction machine according to any of the preceding claims, **characterized in that** the steering device (15) is designed as an articulated steering system (15), and **in that** at least the articulated steering system (15) comprises the steering angle sensor and/or the travel path sensor and/or the adjustment unit and/or the horizontal adjustment unit and/or the linear adjustment unit and/or the rotation axis and/or the sensor region adjustment unit and/or the housing adjustment unit.

12. Construction machine according to any of the preceding claims, **characterized in that** the steering angle sensor is designed as a lifting cylinder displacement path sensor for detecting a displacement path of a lifting cylinder of the steering device.

13. Construction machine according to any of the preceding claims, **characterized in that** the travel path sensor is designed/arranged as a front sensor for forward travel at a front region of the construction machine and/or as a rear sensor for reverse travel at a rear region of the construction machine.

## Revendications

1. Engin de construction mobile (1), en particulier chargeuse sur pneus (1), chargeuse télescopique, excavatrice, tombereau, dispositif de compactage du sol tel qu'un pilon vibrant, une plaque vibrante ou un rouleau, ou similaire, avec un cadre de support (2) et avec une unité d'entraînement (8) pour entraîner au moins un élément d'entraînement (20), par ex. roue/rouleau d'entraînement et/ou train de roulement chenillé ou élément de vibration, et/ou un outil de travail (19), par ex. grappin/godet, fourche, élément de vibration, fraise, une lame de déblaiement, benne ou similaire, l'unité d'entraînement (8) comportant au moins un moteur d'entraînement (8), en particulier un moteur à combustion interne et/ou un moteur électrique et/ou hydraulique (9), et un dispositif de direction (15) pour diriger l'engin de construction en direction d'un trajet de déplacement et un logement d'outil (18) destiné à recevoir et/ou maintenir/fixer l'outil de travail (19) et/ou un système de levage (23), en particulier un bras de levage, un bras de préhension, un bras télescopique, une unité de basculement de benne ou similaire, au moins une unité de contrôle électrique et/ou électronique (12) étant prévue pour contrôler l'unité d'entraînement (8) et/ou le moteur d'entraînement et/ou le dispositif de direction (15) et/ou le système de levage (23) et/ou l'outil de travail (8) et/ou le logement d'outil (18), l'unité de contrôle électrique et/ou électronique (12) comportant au moins une unité de commande autonome pour la conduite autonome et/ou la commande de l'engin de construction (1) dans un mode autonome, au moins une unité de détection de distance et/ou d'environnement (5) étant prévue pour la détection de l'environnement et/ou d'une distance minimale par rapport à l'engin de construction, l'unité de détection de distance et/ou d'environnement comprenant au moins un capteur de trajet de déplacement (5) destiné à détecter le trajet de déplacement à l'intérieur d'une zone de détection (25) et au moins une unité d'ajustement (6, 7, 24) étant prévue pour l'ajustement du capteur de trajet de déplacement (5) et/ou de la zone de détection (25), **caractérisé en ce qu'**au moins un capteur d'angle de braquage est prévu pour détecter un angle de braquage, que l'unité d'ajustement (6, 7, 24) est formée de manière à prévoir l'ajustement du capteur de trajet de déplacement (5) et de la zone de détection (25) en fonction de l'angle de braquage, que l'unité d'ajustement (6, 7, 24) comporte au moins un axe de rotation (6) permettant de tourner le capteur de trajet de déplacement (5) et la zone de détection (25) transversalement/perpendiculairement par rapport au trajet de déplacement et/ou autour d'un axe vertical supérieur (6), de telle sorte que la position du capteur de trajet de déplacement peut être modifiée par rapport à l'axe longitudinal de l'engin de construction.

2. Engin de construction selon la revendication 1, **caractérisé en ce que** l'unité d'ajustement (6, 7, 24) est formée de telle manière que l'ajustement du capteur de trajet de déplacement (5) et/ou de la zone de détection (25) est prévu en fonction d'une vitesse de déplacement.

3. Engin de construction selon l'une des revendications précédentes, **caractérisé en ce que** l'unité d'ajustement (6, 7, 24) est prévue comme unité d'ajustement horizontal (6, 7, 24) pour ajuster le capteur de trajet de déplacement (5) et/ou de la zone de détection (25) transversalement/perpendiculairement par rapport au trajet de déplacement et/ou à un plan horizontal.

4. Engin de construction selon l'une des revendications précédentes, **caractérisé en ce que** l'unité d'ajustement (6, 7, 24) et/ou l'unité d'ajustement horizontal comportent au moins une unité d'ajustement linéaire (24) pour l'ajustement linéaire du capteur de trajet de déplacement (5) et/ou de la zone de détection (25) transversalement/perpendiculairement par rapport au trajet de déplacement et/ou au plan horizontal.

5. Engin de construction selon l'une des revendications précédentes, **caractérisé en ce que** le capteur de trajet de déplacement (5) comporte au moins un boîtier de capteur (16).

6. Engin de construction selon l'une des revendications précédentes, **caractérisé en ce que** l'unité d'ajustement (6, 7, 24) et/ou l'unité d'ajustement horizontal sont formées comme une unité d'ajustement de boîtier pour ajuster le boîtier de capteur (16).

7. Engin de construction selon l'une des revendications précédentes, caractérisé en que l'unité d'ajustement (6, 7, 24) et/ou l'unité d'ajustement horizontal sont formées comme une unité d'ajustement de zone de détection pour ajuster au moins la zone de détection (25) à l'intérieur du boîtier du capteur (16).

8. Engin de construction selon l'une des revendications précédentes, **caractérisé en ce que** l'unité d'ajustement (6, 7, 24) et/ou l'unité d'ajustement horizontal comportent au moins un élément de déviation pour dévier la zone de détection (25).

9. Engin de construction selon l'une des revendications précédentes, **caractérisé en ce qu'**une cabine (4) de conducteur comportant au moins un siège de conducteur et au moins un élément de direction/volant du dispositif de direction (15) est prévue pour un conducteur, au moins un élément de commande (13, 14), en particulier une pédale, appelée joystick, clavier, écran tactile et/ou pavé tactile ou similaire, étant prévu pour être commandé/actionné manuellement par un opérateur dans un mode de conducteur.

10. Engin de construction selon l'une des revendications précédentes, **caractérisé en ce qu'**au moins la cabine (4) de conducteur comprend le capteur de trajet de déplacement (5) et/ou l'unité d'ajustement (6, 7, 24) et/ou l'unité d'ajustement horizontal et/ou l'unité d'ajustement linéaire (24) et/ou l'axe de rotation (6) et/ou l'unité d'ajustement de zone de détection (7) et/ou l'unité d'ajustement de boîtier (7).

11. Engin de construction selon l'une des revendications précédentes, **caractérisé en ce que** le dispositif de direction (15) est formé comme une direction articulée (15) et qu'au moins la direction articulée (15) comprend le capteur d'angle de braquage et/ou le capteur de trajet de déplacement et/ou l'unité d'ajustement et/ou l'unité d'ajustement horizontal et/ou l'unité d'ajustement linéaire et/ou l'axe de rotation et/ou l'unité d'ajustement de zone de détection et/ou l'unité d'ajustement de boîtier.

12. Engin de construction selon l'une des revendications précédentes, **caractérisé en ce que** le capteur d'angle de braquage est formé comme un capteur de trajet de déplacement de cylindre de levage pour détecter un trajet d'ajustement d'un cylindre de levage du dispositif de direction.

13. Engin de construction selon l'une des revendications précédentes, **caractérisé en ce que** le capteur de trajet de déplacement est formé/disposé comme capteur avant pour une marche avant sur une zone avant de l'engin de construction et/ou comme capteur arrière pour une marche arrière sur une zone arrière d'engin de construction.
